# FASCICULE DE BREVET EUROPEEN

(11) **EP 1 009 564 B1**
(45) Date de publication et mention de la délivrance du brevet: **27.02.2002**
(21) Numéro de dépôt: 98914945.5
(22) Date de dépôt: 18.03.1998
(51) Int. Cl.: B23B 5/18

(54) **PROCEDE D'USINAGE D'UN VILEBREQUIN**
METHODE ZUR HERSTELLUNG EINER KURBELWELLE
METHOD FOR MACHINING A CRANKSHAFT

(30) Priorité: 19.03.1997 FR 9703513
(43) Date de publication de la demande: 21.06.2000
(73) Titulaire: RENAULT AUTOMATION COMAU, 92365 Meudon la Forêt, Cedex (FR)
(72) Inventeur: ASSIE, Jean-Paul, F-81100 Castres (FR)
(74) Mandataire: Richebourg, Michel François
(86) Numéro de dépôt international: FR9800547
(87) Numéro de publication internationale: WO9841348

(56) Documents cités:
- EP-A- 0 334 298
- WO-A-96/17705

## Description

La présente invention concerne un procédé d'usinage des vilebrequins selon le préambule de la revendication 1 et comme connu du document EP-A-334 298. Notamment un tel procédé et les adaptations relatives permettant d'assurer la localisation des centrages d'usinage (axe pièce) dans des conditions optimales.

Les vilebrequins sont des pièces mécaniques se présentant sous la forme d'arbres qui assurent la transformation du mouvement rectiligne alternatif de l'ensemble piston-bielle d'un moteur thermique en mouvement circulaire. Ces pièces sont réalisées classiquement par forgeage ou moulage avant d'être usinées précisément pour s'intégrer à l'intérieur d'un carter de moteur thermique.

Pour l'exemple d'un moteur thermique à quatre cylindres, le vilebrequin comporte cinq paliers au moyen desquels il est en liaison pivot avec le carter, quatre manetons disposés parallèlement à l'axe de rotation du vilebrequin et servant à entraîner les quatre bielles et quatre contre-poids assurant un équilibre des masses du vilebrequin par rapport à son axe de rotation avec les quatre manetons et les huit bras qui les décalent de l'axe de rotation du vilebrequin.

Les opérations d'usinage coûtant cher, il est primordial de limiter leur nombre et leur durée et donc de garder le plus possible des surfaces brutes sur les vilebrequins tout en respectant les contraintes géométriques et dynamiques émises par les constructeurs automobiles.

Les contraintes géométriques sont des contraintes de précision d'usinage qui doivent être le plus précis possible afin d'optimiser les liaisons pivot du vilebrequin avec le carter ou les bielles. Le vilebrequin étant à l'origine une pièce forgée ou moulée, les surfaces de référence, c'est à dire les points de centrage, doivent être les plus précis possible pour assumer une répétabilité optimale, c'est à dire une position identique du vilebrequin d'un poste d'usinage à un autre.

Les contraintes dynamiques, quant à elles, concernent l'équilibrage du vilebrequin qui, lors de sa rotation, ne doit pas créer de moment d'inertie en dehors de l'axe de rotation du vilebrequin. Les masses (masse des manetons, masse des contre-poids) et surtout les surfaces restant brutes après usinage doivent être suffisamment équilibrées pour que lors de la rotation du vilebrequin, le balourd résiduel soit minimisé. Le balourd résiduel, c'est à dire un défaut d'équilibrage des vilebrequins peut, s'il est trop important, occasionner une usure prématurée des composants en contact avec celui-ci et ne pas assurer une bonne transmission de mouvement, donc entraîner des pertes de rendement ainsi que des consommations excessives de carburant. D'autre part, un balourd résiduel génère un effet vibratoire qui, si celui-ci prend trop d'amplitude est une cause de manque de confort dans la conduite du véhicule.

Les procédés d'usinage des vilebrequins existants proposent donc d'assurer en début de leur chaîne de fabrication, un centrage de référence dépendant d'une mesure dynamique des masses s'effectuant à partir du vilebrequin brut.

Classiquement, après la mesure dynamique des masses les points de centrages définissant l'axe de référence sont usinés de façon à ce que la zone de balourd et donc l'axe principal d'inertie soient situés dans la zone des contrepoids, de sorte que lors du passage sur "l'équilibreuse" en fin de chaîne de fabrication, le vilebrequin usiné puisse être équilibré par enlèvement minimum de matière en perçant les contrepoids. Il est bien évident que lors du passage en fin de chaîne d'usinage du vilebrequin sur l'équilibreuse, cette dernière mesure son balourd en l'entraînant en rotation sur des surfaces cylindriques coaxiales à l'axe de rotation du vilebrequin lui-même. Comme cité dans la description de l'art antérieur du brevet européen n°0 334 298, ces surfaces cylindriques ont été préalablement usinées lors des phases d'usinage précédentes avec comme points de centrage ceux définis par usinage après mesure dynamique des masses.

Néanmoins, les surfaces brutes du vilebrequin empêchent une mesure dynamique des masses suffisamment précise pour répondre aux critères de qualité des usinages de plus en plus fins demandés par les constructeurs automobiles. Il est particulièrement difficile d'assurer une bonne répétabilité en faisant tenir les extrémités d'un vilebrequin par les mors d'un mandrin de tour pour l'entraîner en rotation afin de mesurer dynamiquement les masses puis en plaçant ces extrémités sur des appuis numérisés de façon à orienter le vilebrequin à des fins de perçage des points de centrages du fait que les mors se sont serrés sur une surface brute, donc imprécise. De même, bien que le principe des appuis numérisés soit la solution technique la plus adaptée au positionnement d'une pièce, les capacités de ce positionnement ne sont pas pleinement exploitées puisque les surfaces avec lesquelles lesdits appuis sont en contact ne sont pas régulières. Aussi, non seulement les appuis numérisés prennent en compte une mesure dynamique imprécise puisque réalisée sur des surfaces irrégulières mais aussi les appuis numérisés orientent le vilebrequin en s'appuyant également sur des surfaces brutes, ce qui a pour conséquence une mauvaise matérialisation de l'axe d'inertie par perçage des points de centrage.

De plus, cette imprécision du repérage de l'axe principal d'inertie et donc de l'axe de référence augmente le balourd résiduel au fur et à mesure de la progression du vilebrequin dans la chaîne d'usinage résultant du manque de précision dans la répétabilité de sorte que lors du passage en "équilibreuse" l'enlèvement de matière sur les contrepoids en fin de chaîne de fabrication des vilebrequins devient une opération longue et coûteuse.

Aussi, bien que le passage du vilebrequin brut dans une machine de mesure dynamique permette de mieux situer la zone de balourdage et d'assurer un meilleur centrage géométrique, cette méthode seule souffre d'une relative d'imprécision.

Partant de cet état de fait, la demanderesse a remis en cause la chaîne d'usinage de vilebrequins classiques et a mené des recherches afin d'obtenir un procédé de fabrication des vilebrequins assurant un meilleur repérage du balourd afin de déterminer avec le maximum de précisions, l'axe de référence de centrage du vilebrequin et donc d'assurer une répétabilité optimale. Ces recherches ont abouti à un procédé de fabrication particulièrement original et judicieux atteignant une précision jamais atteinte jusqu'ici dans ce domaine sans entraîner des surcoûts prohibitifs dans la fabrication de vilebrequins.

Selon la caractéristique principale de l'invention, le procédé d'usinage d'un vilebrequin du type de celui comprenant les opérations de mesure dynamique des masses et de perçage des points de centrage en début de chaîne d'usinage, est remarquable en ce qu'il consiste à prédéfinir par usinage du vilebrequin brut, des surfaces de références avant l'opération de mesure dynamique des masses. Cette caractéristique est particulièrement avantageuse car jusqu'à maintenant et comme décrit dans l'art antérieur, la mesure dynamique du balourd se faisait à partir des surfaces brutes des vilebrequins. Il sera donc plus facile de matérialiser l'axe d'inertie à partir de surface de références usinées et non brutes. La définition par usinage d'un axe géométrique fictif même erroné permet de prendre une référence fixe lors de la mesure dynamique et donc d'assurer un paramétrage optimal des appuis numérisés lors du perçage des points de centrage. D'autre part, la prédéfinition de surfaces de références garantit une bonne répétabilité entre le poste de mesure dynamique des masses et celui de perçage des points de centrage matérialisant l'axe de référence, répétabilité qui n'était pas assurée dans les procédés de l'art antérieur puisque l'entraînement des vilebrequins se faisait directement sur une pièce brute.

La remise en cause de la chaîne d'usinage par la demanderesse, concrétisée par cette première revendication, constitue une rupture dans le raisonnement habituel des hommes du métier en ce qu'il préconise un usinage avant réalisation des surfaces de référence donc avec des points d'appui et de serrage sur la surface brute du vilebrequin. Cette nouvelle technique se démarque de celles proposées par l'art antérieur dans lesquelles les surfaces de références étaient bien usinées sur le vilebrequin avant son équilibrage mais à un stade avancé de sa mise en forme finale, c'est à dire que la machine usinant de telles surfaces de référence avant équilibrage pouvait utiliser des surfaces déjà usinées comme points d'appui et de serrage. Du fait du manque de précision du premier équilibrage (puisque réalisé sur surface brute), la réalisation de surfaces de références pour équilibrage final en prenant appui sur des surfaces usinées à partir d'un axe géométrique mal situé, manque également de précision ce qui entraînement une opération d'équilibrage (quand celui-ci est possible) longue et coûteuse.

Selon une caractéristique particulièrement avantageuse de l'invention, le procédé d'usinage des vilebrequins est remarquable en ce qu'il consiste à prédéfinir lesdites surfaces de références par usinage des deux extrémités du vilebrequin avant l'opération de mesure dynamique des masses. Le choix du lieu de références est particulièrement judicieux par le fait que les extrémités des vilebrequins sont des surfaces facilement usinables comparées aux autres paliers qui se trouvent intercalés entre les bras ou entre les contrepoids.

Selon une autre caractéristique particulièrement avantageuse de l'invention, le procédé consiste à prédéfinir les surfaces de références par détourage des surfaces cylindriques et planes des deux extrémités du vilebrequin. L'utilisation de l'opération de détourage est particulièrement avantageuse par le fait qu'elle permet de ne pas faire tourner le vilebrequin qui, comme pièce brute, donnerait donc une mauvaise prise et un mauvais centrage dans le cas d'une prise par une de ses extrémités dans un mandrin de tour par exemple. D'autre part, l'opération de détourage permet de prendre des points d'appui sur le vilebrequin et donc d'intégrer dans les chaînes de côtes constituant le montage d'usinage de cette opération de détourage, des côtes brutes du vilebrequin afin de respecter les critères d'encombrement et de mouvement du vilebrequin dans le carter ou de passage avec le piston, tels que fixés par le constructeur automobile.

Selon une autre caractéristique particulièrement avantageuse de l'invention, le procédé consiste à placer le vilebrequin dans un dispositif de mesure dynamique, après l'opération d'usinage des surfaces de références et à assurer la rotation du vilebrequin par entraînement par adhérence sur les susdites surfaces cylindriques usinées. Il est en effet possible grâce à la prédéfinition par usinage de surfaces de références d'utiliser un tel moyen de mise en mouvement pour faire tourner le vilebrequin sur l'axe géométrique fictif matérialisé par les surfaces pré-usinées.

Selon une autre caractéristique particulièrement avantageuse de l'invention, lors de la mesure dynamique des masses le diamètre des surfaces de référence cylindriques venant d'être usinées sur le vilebrequin, est mesuré afin que celui-ci entre dans les paramètres de positionnement des appuis numérisés servant au positionnement du vilebrequin lors de l'opération de perçage des points de centrage. Ce paramètre supplémentaire en dehors du fait qu'il apporte une meilleure précision dans la définition de l'axe de référence servant au positionnement du vilebrequin sur une grande partie de sa chaîne d'usinage permet en outre de prendre en compte l'usure des outils servant à l'opération d'usinage des surfaces de références avant équilibrage.

La demanderesse en concevant ce nouveau procédé a pour objectif par une optimisation du procédé lui-même en adéquation avec l'amélioration de la précision et de l'état de surface des vilebrequins sortant du forgeage ou du moulage couplée à une évolution des critères de balourdage résiduel du vilebrequin en fin d'usinage, de supprimer le poste d'équilibrage final classiquement présent en fin de chaîne d'usinage du vilebrequin.

Les concepts fondamentaux de l'invention venant d'être exposés ci-dessus dans leur forme la plus élémentaire, d'autres détails et caractéristiques ressortiront plus clairement à la lecture de la description qui suit donnant à titre d'exemple non limitatif et en regard des dessins annexés, une illustration d'un procédé d'usinage de vilebrequins conforme à l'invention. Cette description se réfère aux dessins annexés sur lesquels :
La figure 1 est une vue de côté d'un vilebrequin standard pour moteur à quatre cylindres.
La figure 2a est une vue de côté du vilebrequin de la figure 1 adoptant un premier mode de réalisation de maintien et de mise en position du vilebrequin.
La figure 2b est une vue de côté du vilebrequin de la figure 2 adoptant un second mode de réalisation de maintien et de mise en position du vilebrequin.

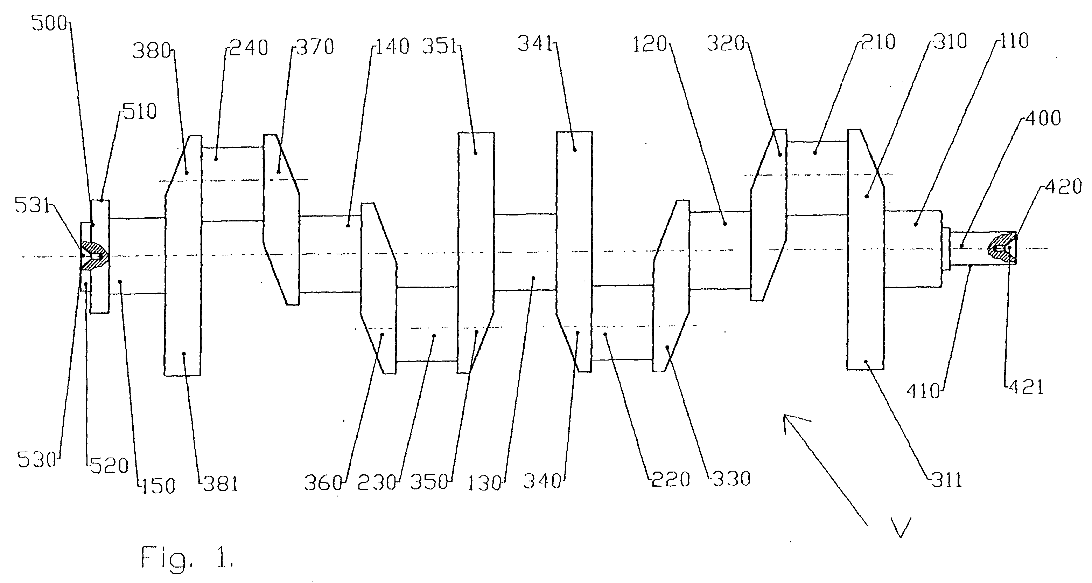

Tel qu'illustré sur le dessin de la figure 1, un vilebrequin pour moteur à quatre cylindres, référencé dans son ensemble V, comporte cinq paliers 110, 120, 130, 140, 150 servant à sa liaison pivot avec le carter du moteur (non représenté). Ce vilebrequin V comporte également quatre manetons 210, 220, 230, 240 dont l'axe est parallèle et décalé par rapport à l'axe de rotation du vilebrequin V de façon à réaliser une liaison bielle/manivelle entre le vilebrequin V et les quatre bielles (non représentées), lesquelles comportent à une extrémité un piston se déplaçant dans un cylindre. Ces manetons 210, 220, 230, 240 sont situés entre les paliers 110, 120, 130, 140, 150 et décalés par rapport à l'axe au moyen de bras 310, 320, 330, 340, 350, 360, 370, 380 assurant non seulement leur décalage mais aussi l'espacement entre les manetons et les paliers. Les deux bras centraux à savoir 340 et 350 ainsi que les deux bras extrêmes à savoir 310 et 380 comportent un contrepoids 341, 351, 311, 381 servant à équilibrer le balourd causé par le déport de la masse des manetons et des bras qui les soutiennent.

Le vilebrequin V tel qu'illustré comporte également deux extrémités 400 et 500 dont la première est formée par une surface cylindrique 410 coaxiale au palier 110 située dans son prolongement mais de diamètre inférieur laquelle est terminée à son extrémité par une surface plane 420 perpendiculaire à l'axe de rotation du vilebrequin V. La deuxième extrémité 500 est dans le prolongement du palier 150 et est formée par une surface cylindrique 510 immédiatement accolée au palier 150 coaxial à celui-ci mais de diamètre supérieur à laquelle est accolé coaxial un autre cylindre 520 de diamètre inférieur terminé par une surface plane 530 perpendiculaire à l'axe de rotation du vilebrequin V.

Avantageusement, le procédé d'usinage de l'invention consiste à prédéfinir les surfaces de références par détourage des surfaces cylindriques 510 et 410 et planes 420 et 530 des deux extrémités 400 et 500 du vilebrequin V. Ainsi, avant l'opération d'équilibrage sont définies deux surfaces parfaitement cylindriques qui en définissant un axe géométrique fictif, servent de références pour l'opération de mesure dynamique des masses.

Cette dernière fait intervenir deux disques de contact par surface cylindrique qui entraînent par adhérence en rotation le vilebrequin V autour d'un axe défini par les deux surfaces cylindriques 410 et 510. La mise en rotation du vilebrequin V sur un axe géométrique particulièrement bien défini permet une mesure du balourdage particulièrement précise.

Cette mesure dynamique des masses sur des surfaces déjà usinées permet de paramétrer le positionnement des extrémités du vilebrequin V lors de l'opération suivante qui consiste à matérialiser précisément l'axe principal d'inertie en perçant sur les surfaces planes 420 et 530 des points de centrage 421 et 531, matérialisant un axe de référence qui servira à positionner le vilebrequin V dans chaque poste d'usinage constituant la suite de la chaîne de fabrication de celui-ci.

Aussi, selon l'invention, le procédé d'usinage du vilebrequin (V) est remarquable en ce qu'il consiste, après les opérations de mesure dynamique des masses et des diamètres, à placer le vilebrequin (V) dans un dispositif assurant le perçage de points de centrage (421 et 531) sur les surfaces planes de référence (420 et 530) des deux extrémités pré-usinées (400 et 500) du vilebrequin (V) de façon à situer la zone de balourd dans les contrepoids dudit vilebrequin (V) les points de centrage étant utilisés pour la mise en place dudit vilebrequin (V) sur chaque poste de la chaîne d'usinage. En outre, selon une autre caractéristique particulièrement avantageuse de l'invention, le positionnement du vilebrequin (V) dans ledit dispositif de perçage est réalisé sur des points d'appuis numérisés qui viennent en contact avec lesdites surfaces cylindriques pré-usinées (410 et 510) en tenant compte de la mesure dynamique des masses et des diamètres.

Cette dernière caractéristique amène un autre avantage de la présence de surfaces de référence usinées en ce que la technologie des appuis numérisés est beaucoup mieux exploitée. En effet, en dehors du fait que les paramètres de mesure dynamique et de mesure du diamètre soient beaucoup plus précis du fait du pré-usinage du vilebrequin brut avant mesure dynamique, la présence de surfaces cylindriques régulières créée une zone de positionnement précis pour lesdits appuis numérisés présents sur le dispositif de perçage, ce qui facilite et améliore grandement la matérialisation de l'axe pièce par perçage des points de centrage.

Ainsi, grâce à cette précision dans la matérialisation de l'axe principal d'inertie, il sera aisé de donner la meilleure répétabilité possible dans les opérations de transfert entre lesdits différents postes.

La rupture dans la conception classique de la gamme d'usinage d'un vilebrequin, concrétisée par le présent procédé, à savoir usiner des surfaces de références sur un vilebrequin brut avant d'assurer une première mesure dynamique des masses et avant le perçage des points de centrage apporte donc un grand nombre d'avantages et fait évoluer la précision des usinages d'un vilebrequin vers un niveau jamais atteint jusqu'ici par les gammes d'usinage et procédés classiques.

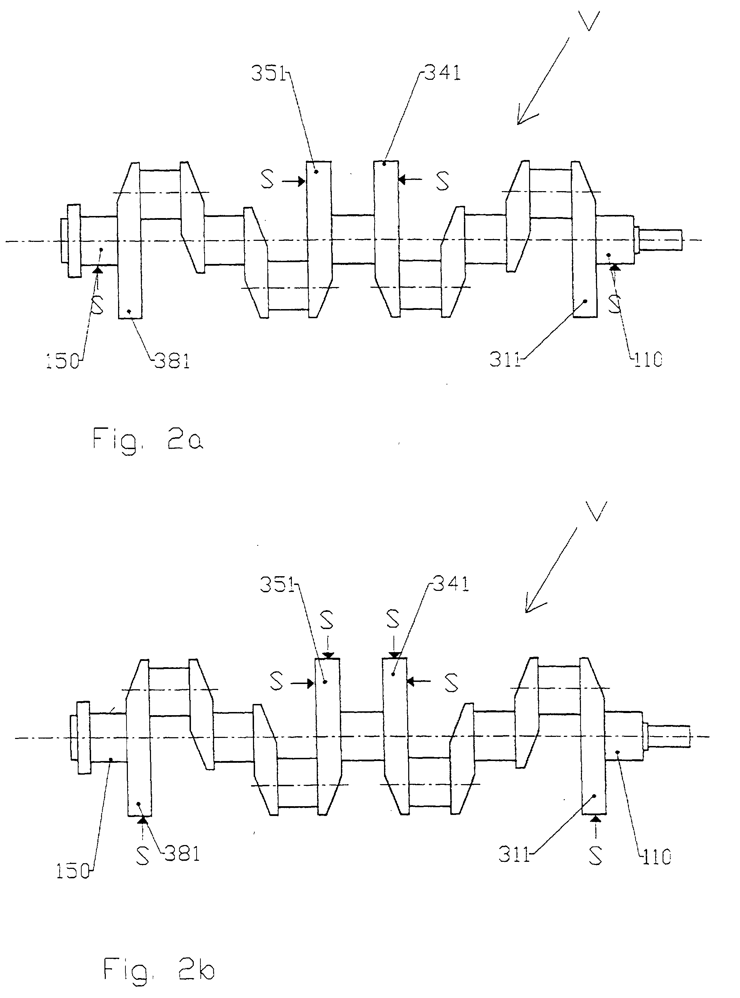

La figure 2a illustre un mode de réalisation préférée de mise en position et de maintien en position, du vilebrequin lors de l'opération de détourage. Avantageusement, les appuis du serrage ( matérialisés par les flèches S) du vilebrequin V sont réalisés sur les premier 110 et cinquième 150 paliers et sur les surfaces latérales des deux contrepoids centraux 341 et 351.

Selon une autre caractéristique particulièrement avantageuse de l'invention, l'opération de serrage ( matérialisé par les flèches S) du vilebrequin V est réalisé concentriquement lors de l'opération de détourage.

La figure 2b illustre un autre mode de réalisation préférée de mise en position et de maintien en position du vilebrequin, lors de l'opération de détourage.

Avantageusement, les appuis du serrage ( matérialisés par les flèches S ) du vilebrequin V sont réalisés sur les premier 110 et cinquième 150 paliers, sur les surfaces latérales des deux contrepoids centraux 351 et 341 et sur les surfaces cylindriques des quatre contrepoids 311, 341, 351 et 381, lors de l'opération de détourage définissant les surfaces de références 510 et 410. Ainsi, lorsque dans le cahier des charges, les surfaces cylindriques des contrepoids restent brutes, ce type de centrage pour l'opération de détourage permet de matérialiser l'axe géométrique fictif par rapport à la surface brute cylindrique des contrepoids, ce qui a pour avantage de prendre en compte les critères d'encombrement pour le passage des contrepoids à l'intérieur du carter et notamment lors de la remontée du piston. De même que pour le premier mode de réalisation de la mise en position et de maintien en position, l'opération de serrage (matérialisée par les flèches S) est avantageusement réalisée concentriquement.

On comprend que le procédé d'usinage d'un vilebrequin qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges.

Afin de permettre une meilleure compréhension des dessins, une liste des références avec leurs légendes est ci-après énumérée.

| | |
|---|---|
| 110, 120, 130, 140, 150 | Paliers du vilebrequin V |
| 210, 220, 230, 240 | Manetons du vilebrequin V |
| 310, 320, 330, 340, | |
| 350, 360, 370, 380 | Bras porteurs des manetons |
| 311, 341, 351, 381 | Contrepoids |
| 400 | Première extrémité du vilebrequin V |

| | |
|---|---|
| 410 | Surface cylindrique |
| 420 | Surface plane |
| 421 | Point de centrage |
| 500 | Deuxième extrémité du vilebrequin V |
| 510 | Surface cylindrique |
| 520 | Cylindre de bout |
| 530 | Surface plane |
| 531 | Point de centrage |
| V | Vilebrequin |
| Flèches S | Points de serrage du vilebrequin V |

## Revendications

1. Procédé d'usinage d'un vilebrequin (V) du type de celui comprenant les opérations de mesure dynamique des masses et de perçage des points de centrage en début de chaîne d'usinage, **CARACTERISE EN CE QU'**il consiste à prédéfinir par usinage du vilebrequin (V) brut, des surfaces de références avant l'opération de mesure dynamique des masses.

2. Procédé d'usinage d'un vilebrequin (V) selon la revendication 1, **CARACTERISE EN CE QU'**il consiste à prédéfinir lesdites surfaces de références par usinage des deux extrémités (400 et 500) du vilebrequin (V) avant l'opération de mesure dynamique des masses.

3. Procédé d'usinage d'un vilebrequin (V) selon les revendications 1 et 2 , **CARACTERISE EN CE QU'**il consiste à prédéfinir les susdites surfaces de références par détourage des surfaces cylindriques (410 et 510) et planes (420 et 530) des deux extrémités (400 et 500) du vilebrequin (V).

4. Procédé d'usinage d'un vilebrequin (V) pour moteur à quatre cylindres en ligne selon la revendication 3 , **CARACTERISE EN CE QUE** le centrage du vilebrequin (V) est réalisé sur les premier et cinquième paliers (110 et 150) et sur les surfaces latérales des deux contrepoids centraux (341 et 351), lors de l'opération de détourage prédéfinissant les surfaces de références.

5. Procédé d'usinage d'un vilebrequin (V) pour moteur à quatre cylindres en ligne selon la revendication 3, **CARACTERISE EN CE QUE** le centrage du vilebrequin est réalisé sur les premier et cinquième paliers (110 et 150), sur les surfaces latérales des deux contrepoids centraux (341 et 351), et sur les surfaces cylindriques des quatre contrepoids (311, 341, 351, 381) du vilebrequins (V), lors de l'opération de détourage prédéfinissant les surfaces de références.

6. Procédé d'usinage d'un vilebrequin (V) selon la revendication 3, **CARACTERISE EN CE QU'**il consiste à placer le vilebrequin (V) dans un dispositif de mesure dynamique, après l'opération d'usinage des surfaces de références et à assurer la rotation du vilebrequin (V) par entraînement par adhérence sur les susdites surfaces cylindriques (410 et 510) usinées.

7. Procédé d'usinage d'un vilebrequin (V) selon la revendication 6, **CARACTERISE EN CE QUE** les susdites surfaces usinées cylindriques (410 et 510) de référence situées à chaque extrémité (400 et 500) du vilebrequin (V) sont placées en contact sur deux roues d'entraînement dont les axes de rotation sont parallèles de sorte que lors du mouvement de rotation desdites roues, le vilebrequin (V) soit entraîné en rotation par adhérence à des fins de mesure dynamique des masses.

8. Procédé d'usinage d'un vilebrequin (V) selon la revendication 7, **CARACTERISE EN CE QU'**il consiste à mesurer les diamètres des surfaces de référence cylindriques (410 et 510) pré-usinées.

9. Procédé d'usinage d'un vilebrequin (V) selon les revendications 6, 7 et 8 prises ensemble, **CARACTERISE EN CE QU'**il consiste, après les opérations de mesure dynamique des masses et des diamètres, à placer le vilebrequin (V) dans un dispositif assurant le perçage de points de centrage (421 et 531) sur les surfaces planes de référence (420 et 530) des deux extrémités pré-usinées (400 et 500) du vilebrequin (V) de façon à situer la zone de balourd dans les contrepoids dudit vilebrequin (V) les points de centrage étant utilisés pour la mise en place dudit vilebrequin (V) sur chaque poste de la chaîne d'usinage, ET PAR LE FAIT QUE le positionnement du vilebrequin (V) dans ledit dispositif de perçage est réalisé sur des points d'appuis numérisés qui viennent en contact avec lesdites surfaces cylindriques pré-usinées (410 et 510) en tenant compte de la mesure dynamique des masses et des diamètres.

10. Procédé d'usinage d'un vilebrequin (V) selon les revendications 3, 4 et 5, **CARACTERISE EN CE QUE** le serrage (Flèche S) du vilebrequin (V) est réalisé concentriquement sur ce dernier lors de l'opération de détourage.

## Patentansprüche

1. Verfahren zur Bearbeitung einer Kurbelwelle (V), umfassend die Arbeitsgänge der dynamischen Messung der Massen und des Bohrens der Zentrierpunkte zu Beginn der Bearbeitungskette, **dadurch gekennzeichnet, dass** es darin besteht, vor dem Arbeitsgang der dynamischen Messung der Massen durch Bearbeitung der rohen Kurbelwelle (V) Bezugsoberflächen vorzudefinieren.

2. Verfahren zur Bearbeitung einer Kurbelwelle (V) nach Anspruch 1, **dadurch gekennzeichnet, dass** es darin besteht, die genannten Bezugsoberflächen durch Bearbeitung der beiden Enden (400 und 500) der Kurbelwelle (V) vor dem Arbeitsgang der dynamischen Messung der Massen vorzudefinieren.

3. Verfahren zur Bearbeitung einer Kurbelwelle (V) nach den Ansprüchen 1 und 2, **dadurch gekennzeichnet, dass** es darin besteht, die obengenannten Bezugsoberflächen durch Beschneiden der zylindrischen (410 und 510) und ebenen Oberflächen (420 und 530) der beiden Enden (400 und 500) der Kurbelwelle (V) vorzudefinieren.

4. Verfahren zur Bearbeitung einer Kurbelwelle (V) für einen Motor mit vier Zylindern in Reihe nach Anspruch 3, **dadurch gekennzeichnet, dass** beim Arbeitsgang des Beschneidens, der die Bezugsoberflächen vordefiniert, die Zentrierung der Kurbelwelle (V) auf dem ersten und fünften Lager (110 und 150) und auf den seitlichen Oberflächen der zwei zentralen Gegengewichte (341 und 351) ausgeführt wird.

5. Verfahren zur Bearbeitung einer Kurbelwelle (V) für einen Motor mit vier Zylindern in Reihe nach Anspruch 3, **dadurch gekennzeichnet, dass** beim Arbeitsgang des Beschneidens, der die Bezugsoberflächen vordefiniert, die Zentrierung der Kurbelwelle auf dem ersten und fünften Lager (110 und 150), auf den seitlichen Oberflächen der zwei zentralen Gegengewichte (341 und 351) und auf den zylindrischen Oberflächen der vier Gegengewichte (311, 341, 351, 381) der Kurbelwelle (V) ausgeführt wird.

6. Verfahren zur Bearbeitung einer Kurbelwelle (V) nach Anspruch 3, **dadurch gekennzeichnet, dass** es darin besteht, die Kurbelwelle (V) nach dem Arbeitsgang der Bearbeitung der Bezugsoberflächen in eine Vorrichtung zur dynamischen Messung zu transferieren und für die Drehung der Kurbelwelle (V) durch Antrieb mittels kraftschlüssiger Verbindung mit den obengenannten bearbeiteten zylindrischen Oberflächen (410 und 510) zu sorgen.

7. Verfahren zur Bearbeitung einer Kurbelwelle (V) nach Anspruch 6, **dadurch gekennzeichnet, dass** die obengenannten bearbeiteten zylindrischen Bezugsoberflächen (410 und 510), die sich an jedem Ende (400 und 500) der Kurbelwelle (V) befinden, in Kontakt mit zwei Antriebsrädern gebracht werden, deren Drehachsen parallel sind, so dass bei der Drehbewegung der genannten Räder die Kurbelwelle (V) zum Zweck der dynamischen Messung der Massen durch kraftschlüssige Verbindung in eine Drehbewegung versetzt wird.

8. Verfahren zur Bearbeitung einer Kurbelwelle (V) nach Anspruch 7, **dadurch gekennzeichnet, dass** es darin besteht, die Durchmesser der vorbearbeiteten zylindrischen Bezugsoberflächen (410 und 510) zu messen.

9. Verfahren zur Bearbeitung einer Kurbelwelle (V) nach den Ansprüchen 6, 7 und 8 in ihrer Gesamtheit genommen, **dadurch gekennzeichnet, dass** es darin besteht, nach den Arbeitsgängen der dynamischen Messung der Massen und der Durchmesser die Kurbelwelle (V) in einer Vorrichtung, die für das Bohren der Zentrierpunkte (421 und 531) an den ebenen Bezugsoberflächen (420 und 530) der beiden vorbearbeiteten Enden (400 und 500) der Kurbelwelle (V) sorgt, so anzuordnen, dass der Unwuchtbereich in den Gegengewichten der genannten Kurbelwelle V liegt, wobei die Zentrierpunkte für die Plazierung der genannten Kurbelwelle (V) in jeder Station der Bearbeitungskette verwendet werden, und dass die Positionierung der Kurbelwelle (V) in der genannten Bohrvorrichtung auf digitalisierten Auflagepunkten, die mit den genannten vorbearbeiteten zylindrischen Oberflächen (410 und 510) in Kontakt kommen, erfolgt, wobei die dynamische Messung der Massen und der Durchmesser berücksichtigt wird.

10. Verfahren zur Bearbeitung einer Kurbelwelle (V) nach den Ansprüchen 3, 4 und 5, **dadurch gekennzeichnet, dass** beim Arbeitsgang des Beschneidens das Einspannen (Pfeil S) der Kurbelwelle (V) auf konzentrische Weise an der letztgenannten ausgeführt wird.

## Claims

1. Method for machining a crankshaft (V) of the type comprising operations of dynamic mass measurement and centering points drilling at the start of the machining line, WHEREIN it consists in pre-setting reference surfaces by machining of the raw crankshaft (V), before the operation of dynamic mass measurement.

2. Method for machining a crankshaft (V) according to claim 1, WHEREIN it consists in pre-setting the said reference surfaces by machining the two ends (400 and 500) of the crankshaft (V) before the dynamic mass measurement operation.

3. Method for machining a crankshaft (V) according to claims 1 and 2, WHEREIN it consists in pre-setting the said reference surfaces by trimming the cylindrical surfaces (410 and 510) and plane surfaces (420 and 530) of the two ends (400 and 500) of the crankshaft (V).

4. Method for machining a crankshaft (V) for engine with four in-line cylinders according to claim 3, WHEREIN the centering of the crankshaft (V) is executed on the first and fifth bearings (110 and 150) and on the lateral surfaces of the two centre counterweights (341 and 351), during the trimming operation pre-setting the reference surfaces.

5. Method for machining a crankshaft (V) for engine with four in-line cylinders according to claim 3, WHEREIN the centering of the crankshaft is executed on the first and fifth bearings (110 and 150), on the lateral surfaces of the two centre counterweights (341 and 351), and on the cylindrical surfaces of the four counterweights (311, 341, 351, 381) of the crankshaft (V), during the trimming operation pre-setting the reference surfaces.

6. Method for machining a crankshaft (V) according to claim 3, WHEREIN it consists of placing the crankshaft (V) in a dynamic measure device, after the operation of machining the reference surfaces and in ensuring the rotation of the crankshaft (V) by driving by adherence on the aforesaid machined cylindrical surfaces (410 and 510).

7. Method for machining a crankshaft (V) according to claim 6, WHEREIN the aforesaid machined reference cylindrical surfaces (410 and 510) situated at each end (400 and 500) of the crankshaft (V) are placed in contact on two driving discs on which the rotation axes are parallel so that during the rotation movement of the said discs, the crankshaft (V) is driven in rotation by adherence for means of dynamic mass measurement.

8. Method for machining a crankshaft (V) according to claim 7, WHEREIN it consists of measuring the diameters of the pre-machined cylindrical reference surfaces (410 and 510).

9. Method for machining a crankshaft (V) according to claims 6, 7 and 8 taken together, WHEREIN it consists, after the dynamic mass and diameter measurement, in placing the crankshaft (V) in a device ensuring centering points drilling of points (421 and 531) on the plane reference surfaces (420 and 530) of the two pre-machined ends (400 and 500) of the crankshaft (V) so as to situate the unbalance zone in the counterweights of the said crankshaft (V) the centering points being used to put into place the said crankshaft (V) on each station of the machining line, and WHEREIN the positioning of the crankshaft (V) in the said drilling device is executed with numerised support points which come into contact with the said pre-machined cylindrical surfaces (410 and 510) while taking into account the dynamic mass and diameter measurement.

10. Method for machining a crankshaft (V) according to claims 3, 4 and 5, WHEREIN the gripping (arrow S) of the crankshaft (V) is executed concentrically on the latter during the trimming operation.
